# EUROPEAN PATENT APPLICATION

(11) **EP 2 168 650 A1**
(43) Date of publication of application: **31.03.2010**
(21) Application number: 09169331.7
(22) Date of filing: 03.09.2009
(51) Int. Cl.: B01D 29/15, B01D 46/24, B01D 46/02, B01D 63/06

(54) **Membrane tabs**

(30) Priority: 24.09.2008 US 236572
(71) Applicant: BHA Group, Inc, Kansas City, MO 64133 (US)
(72) Inventor: Devine, Robert Henry II, Lees Summit, MO 64082 (US); Small, Terrence P., Downington, PA 19335 (US)
(74) Representative: Bedford, Grant Richard

(57) **Abstract**

A candle filter 10 includes an end portion 22, 24, elongate interior structure 20 extending from the end portions and defining a space for a fluid, and a membrane fabric 40 for filtering a substance from the fluid as the fluid passes through the membrane fabric and into the space defined by the interior structure. The membrane fabric 40 extends around the interior structure and to the first end portion. The membrane fabric 40 includes at least one extending tab segment 42 for manipulating to move the membrane fabric relative to the elongate interior structure. An associated method provides an operational candle filter 10.

## Description

The present invention relates generally to candle filters.

A candle filter is elongate and has a membrane fabric that extends along a substantial extent of the filter. Fluid flows through the membrane fabric and one or more substances are filtered out. The membrane fabric may be fragile, delicate, or the like.

The following presents a simplified summary of the invention in order to provide a basic understanding of some aspects of the invention. This summary is not an extensive overview of the invention. It is intended to identify neither key nor critical elements of the invention nor delineate the scope of the invention. Its sole purpose is to present some aspects of the invention in a simplified form as a prelude to the more detailed description that is presented later.

In accordance with an aspect, the present invention provides a candle filter that includes an end portion, elongate interior structure extending from the end portions and defining a space for a fluid, and a membrane fabric for filtering a substance from the fluid as the fluid passes through the membrane fabric and into the space defined by the interior structure. The membrane fabric extends around the interior structure and to the first end portion. The membrane fabric includes at least one extending tab segment for manipulating to move the membrane fabric relative to the elongate interior structure.

In accordance with another aspect, the present invention provides a method of providing an operational candle filter. An end portion is provided. An elongate interior structure extending from the end portion and defining a space for a fluid is provided. A membrane fabric for filtering a substance from the fluid as the fluid passes through the membrane fabric and into the space defined by the interior structure is provided. The membrane fabric includes at least one extending tab segment for manipulating to move the membrane fabric relative to the elongate interior structure. The membrane fabric is placed to extend around the interior structure and to extend to the end portion. The step of placing the membrane fabric includes manipulating the tab segment of the membrane fabric to move the membrane fabric relative to the elongate interior structure.

In accordance with another aspect, the present invention provides a candle filter that includes an end portion, elongate interior structure extending from the end portions and defining a space for a fluid, and a membrane fabric for filtering a substance from the fluid as the fluid passes through the membrane fabric and into the space defined by the interior structure. The membrane fabric extends around the interior structure and to the first end portion. The membrane fabric includes at least one extending means for manipulating to move the membrane fabric relative to the elongate interior structure.

Various features and advantages of the present invention will become apparent to those skilled in the art to which the present invention relates upon reading the following description with reference to the accompanying drawings, in which:
Fig. 1 is a schematic illustration of an example candle filter that may incorporate a membrane fabric that in turn incorporated an example of the present invention;
Fig. 2 is portion of a membrane fabric that may be used within the example candle filter shown in Fig. 1 and incorporated an example of at least one tab in accordance with one aspect of the present invention;
Fig. 3 is a view taken along line 3-3 in Fig. 2;
Fig. 4 is a section view of one portion of an example candle filter and shows one example embodiment of positioning of a tab;
Fig. 5 is a section view of another portion of an example candle filter and shows another example embodiment of positioning of a tab;
Fig. 6 is a view similar to Fig. 4, but shows a different example of positioning of a tab;
Fig. 7 is a view similar to Fig. 5, but shows a different example of positioning of a tab; and
Fig. 8 is a flow chart for an example method of providing an operational candle filter.

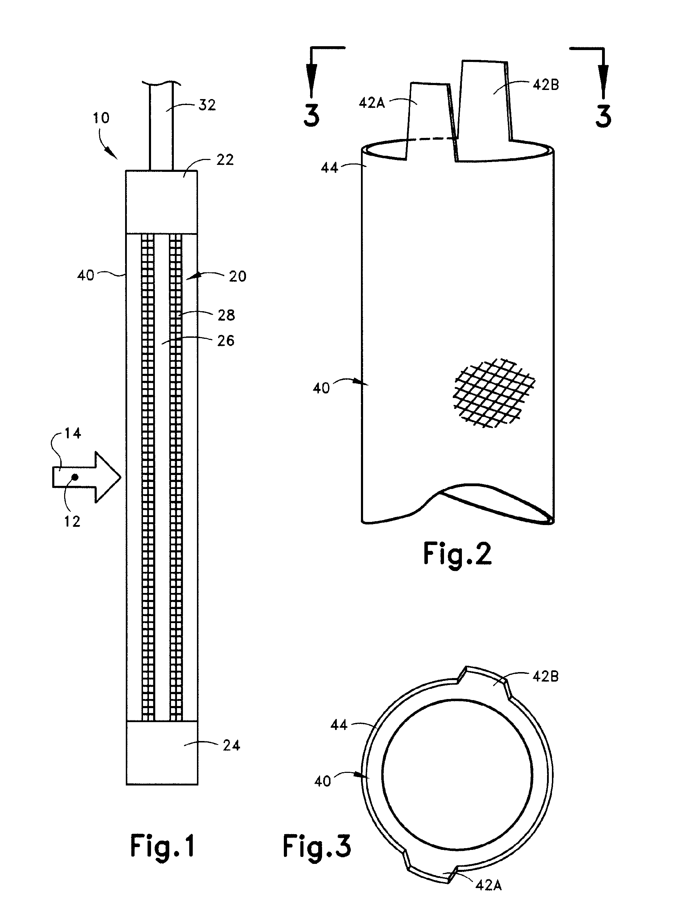

A schematic illustration of a candle filter 10 is provided by Fig. 1. The candle filter 10 is for filtering at least one substance 12 (schematically represented as merely a dot in Fig. 1) from a fluid 14 (schematically represented as an arrowhead in fig. 1). The particular fluid 14 to be filtered and the particular substance 12 to be filtered from the fluid can certainly be varied as will be appreciated by the person of ordinary skill in the art. Also, type of fluid 14 (e.g., liquid or gaseous) and the type of substance 12 (e.g., particulate, suspended, co-mingled, etc.) may be varied as will be appreciated by the person of ordinary skill in the art.

It is to be appreciated that the specifics of the candle filter 10 are not necessarily limitations on the present invention and the presented candle filter is merely an example. In this shown example, the candle filter 10 includes elongate interior structure 20 that extends between two end portions 22, 24. The interior structure 20 may include a core or tube 26 at an innermost location and a cage 28 that extends around the core. The interior structure 20 defines an interior space 30 into which the fluid 14 passes during a filtering process. In the shown example, the two end portions 22, 24 bound the interior structure 20 and thus the space 30 defined by the interior structure. Fluid can flow along the tube 26. A hollow tube shaft 32 is in fluid communication with the tube 26, and the tube shaft extends through the upper end portion 22 to provide a conduit from the interior space 30 for conduction of the filtered fluid as will be appreciated by the person of ordinary skill in the art. It is to be appreciated that the two end portions 22, 24 may have any suitable construction and configuration and may contain portions for attachment to the interior structure 20 and the tube shaft 32. The end portions 22, 24 also have suitable construction and configuration to receive and retain a membrane fabric 40 that extends around the interior structure 20 (i.e., the core and the cage) and between the end portions 22, 24.

It should be noted that membrane fabric 40 is elongate and thus is configured somewhat as an elongate tube. For the shown example, the membrane fabric 40 is open at both ends, with each open end for connection to a respective end portion 22, 24 of the candle filter 10. However, it is contemplated that the membrane fabric 40 could only have a single open end and thus would have a closed end opposite the open end. For such a single opening membrane fabric, the candle filter would have a different configuration with only a single end portion (e.g., the upper end portion) to retain the membrane fabric.

Focusing again upon the disclosed example, the membrane fabric 40 for filtering the at least one substance 12 from the fluid 14 as the fluid passes through the membrane fabric and into the space 30 defined by the interior structure 20. The membrane fabric 40 may have various constructions and/or configurations. It is contemplated that the membrane fabric 40 is a separate item from the rest of the components of the candle filter 10. As such, it is contemplated that the membrane fabric 40 is to be placed or installed onto the candle filter 10. Also, the membrane fabric 40 may be removed from the candle filter 10. Such removal may be associated with cleaning or replacement of the membrane fabric 40. Thus, returning the membrane fabric 40 onto the candle filter 10, or merely placing a new membrane fabric on the candle filter is contemplated.

As can be appreciated, the candle filter 10 is elongated. Thus, installation and removal of the membrane fabric 40 requires movement of the membrane fabric along the elongate extent of the candle filter 10.

It is to be noted that depending upon the construction/configuration of the membrane fabric 40, the membrane fabric may be fragile, delicate, or the like. This may be due in part to material thinness or one or more other material properties. Also, the structure and/or components of the candle filter 10 may pose additional issues (e.g., sticking, snagging) during installation/removal movement of the membrane fabric 40 along the candle filter.

In accordance with one aspect of the present invention, the membrane fabric 40 includes at least one tab 42A (Fig. 2). In the shown example of Fig. 2, two tabs 42A, 42B are provided at an open end portion 44 of the membrane fabric 40. Thus, location at the open end portion is one example of the tabs 42A, 42 B being located adjacent to the opening of the membrane fabric 40. In the shown example (see Fig. 3), the two tabs 42A, 42B are at diametrically opposed locations. Of course a different number (less or more) of tabs may be provided. Examples of such different numbers for such tabs include one, three, and four tabs. Each tab (e.g., 42A) is only at a short arc of the periphery of the circumference of the membrane fabric. Also, each tab (e.g., 42A) extends a relative short length from the otherwise end of the membrane fabric 40 when compared to the overall length of the membrane fabric. It is contemplated that each tab (e.g., 42A) may have any of several shapes. The tabs may even have different shapes. In the shown example, the tabs 42A, 42B are trapezoidal shaped. Thus, the shown tabs 42A, 42B are examples of extending tab segments. Also in the shown example, the tabs 42A, 42B are made of the same material as the rest of the membrane fabric. However, it is contemplated that a different construction/configuration for these aspects may be employed. For example, each tab may be configured into a loop or other configuration.

It is to be noted that these shown tabs 42A, 42B are provided at the open end of the membrane fabric 40. It is contemplated that tabs may be present or omitted from a closed end of the membrane fabric.

The tab(s) (e.g., 42A) on the membrane fabric 40 is for manipulating to move the membrane fabric relative to the elongate interior structure 20. Such manipulation may be manual, such as by gripping by a hand of a person, or tool-assisted, such as via a tool engaging onto the tab(s). The tool may grip the tab (e.g., 42A) in a manner similar to a hand grasping the tab. Thus, the tab(s) (e.g., 42A) is an example of means for manipulating.

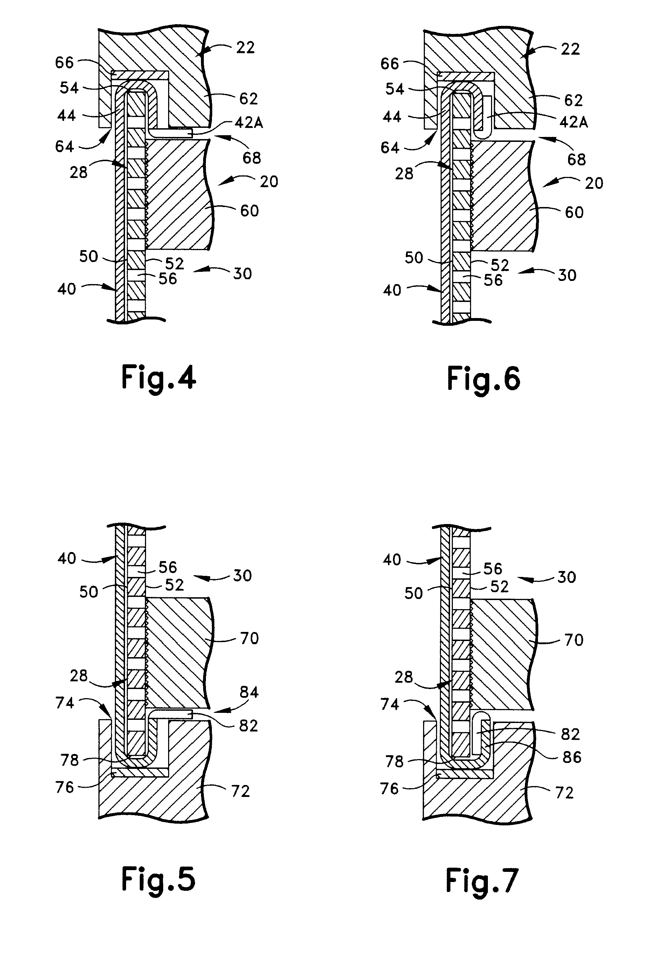

As can be appreciated, the membrane fabric 40 is intended to be sealed into the candle filter 10 at the end portion(s) (e.g., 44). The tab(s) (e.g., 42A) does not interfere with sealing. Several approaches are possible concerning tab placement during sealing and Figs. 4-7 provide some examples. It is to be appreciated that the structures shown in Figs. 4-7 are not intended to be limitations on the present invention, but are merely provided an example of the interrelations that may be present and to shown tab placement within such example. For expedience, portions that correspond to portions shown in the schematic drawings of Fig. 1 are identified via the same reference numbers in Figs. 4-7. Additional numbers are provided as needed.

Turning to Fig. 4, a portion of an example candle filter (e.g., example of 10 schematically shown in Fig. 1) is shown. Specifically, the shown portion of the candle filter is at a junction between the interior structure 20 (e.g., including the cage 28), the upper end portion 22 and the membrane fabric 40. It should be appreciated that the views of Figs. 4-7 are section views and that some structures are cut in section. The section line indicia are not intended to provide limitations upon the type of materials that may be used for the components.

The cage 28 of the interior structure 20 has a generally elongate cylindrical shape with an outer surface 50, an inner surface 52 and an end surface 54. A series of openings 56 extend between the outer and inner surfaces 50, 52. The openings 56 may be of a variety of number, size, configuration, etc. In general, the openings 56 allow for fluid flow to the interior space 30.

A top block 60 of the interior structure 20 is located within the cage 28 adjacent to an upper portion of the cage. The top block 60 is engaged with the cage to retain the cage within the structure of the candle filter. The engagement between the cage 28 and top block 60 may have a variety of configurations. In the shown example, threads are shown on the top block 60 for engagement. The top block 60 may also be engaged with other structures (not shown within the drawings), such as the tube of the interior structure.

An upper sealing block 62 of the upper end portion 22 is located above the cage 28 and top block 60. The upper sealing block 62 extends beyond the cage 28. A downwardly facing annular groove 64 is located above the cage 28 and is located on the sealing block 62 such that the upper end portion of the cage extends into the annular groove. In general, upper sealing block 62 is an example of a member of the upper end portion 22. The upper end portion may include several other members. For example, a sealing member 66 is located within the annular groove 64.

The membrane fabric 40 extends up along the outer surface of the cage 28. As will be appreciated, the filtering function occurs as the fluid passes thought the membrane fabric 40 and subsequently through the openings 56 in the cage 28 to the interior of the candle filter. As will also be appreciated the filtered fluid will continue to move along the candle filter and out for further handling/disposition. The substance filtered from the fluid is retained outside of the membrane fabric 40.

The open end portion 44 of the membrane fabric 40 is wrapped over and around the end surface 54 of the cage 28 so that a relatively short portion of the membrane fabric is located on the interior of the cage. This wrapping thus provides for a portion of the membrane fabric 40 to be located within the annular groove 64 of the sealing block 62. This provides for an entrapment/retention of the membrane fabric 40 within the candle filter. The sealing block 62 of the end portion 22 seals the opening of the membrane fabric 40, thus fluid must flow through the membrane fabric.

It is to be recalled that the membrane fabric 40 includes at least one tab (e.g., 42A). In the example of Fig. 4 the tab 42A is positioned in a space 68 between the top block 60 and the upper sealing block 62. During installation of the membrane fabric 40 into the candle filter, the tab(s) (e.g., 42A) can be manipulated (e.g., grasped) during movement of the membrane fabric along the extent of the candle filter. Once the membrane fabric 40 is in place around the cage 28, the open end portion 44 is wrapped over the end surface 54 of the cage 28 and the tab 42A is laid against the top block 60. Subsequently, the upper sealing block 62 is brought into securing engagement. It should be noted that the membrane fabric 40 of Fig. 4 may be closed at the non-shown end or may be open at the non-shown end.

Fig. 5 is a view of a portion of an example candle filter 10. It is to be appreciated that the shown portion is of a bottom of the candle filter. It should be appreciated that shown bottom may be part of the same candle filter as that which is shown in Fig. 4 or may be part of a different candle filter. It is contemplated that the membrane fabric may only be open at the bottom. For the sake of expedience, discussion will be presented with the shown bottom being considered part of the same candle filter as shown in Fig. 4.

In Fig. 5, similar to Fig. 4, a bottom block 70 is engaged with the cage 28. Also, a lower sealing block 72, with an annular groove 74 and a sealing member 76, is provided. The membrane fabric 40 extends along the exterior of the cage 28 and is wrapped around an end surface 78 of the cage. A tab 82, which is located at the bottom of the membrane fabric 40, is placed in a space 84 between the bottom block 70 and the lower sealing block 72. The tab 82 at the bottom of the membrane fabric may be similar to the tabs 42A, 42B described earlier.

Fig. 6 is a view similar to Fig. 4. However, it should be noted that the tab 42A is folded back against the end portion 44 of the membrane fabric 40. Such folding places the tab 42A partially into the annular groove 64 of the upper sealing block 62. In this shown example, the tab 42A is folded to engage an inner side of the annular groove 64. It is to be appreciated that such folding may be utilized at either an upper end of the membrane fabric or a lower end, if a membrane fabric opening and a tab are present at the lower end.

Fig. 7 is a view similar to Fig. 5. However, it should be noted that the tab 82 is folded back against the end portion of the membrane fabric 40. Such folding places the tab 82 partially into the annular groove 74 of the lower sealing block 72. In this shown example, the tab 82 is folded to engage an inner surface 52 of the cage 28. It is to be appreciated that such folding may be utilized at either a lower end of the membrane fabric or an upper end, if a membrane fabric opening and a tab are present at the upper end.

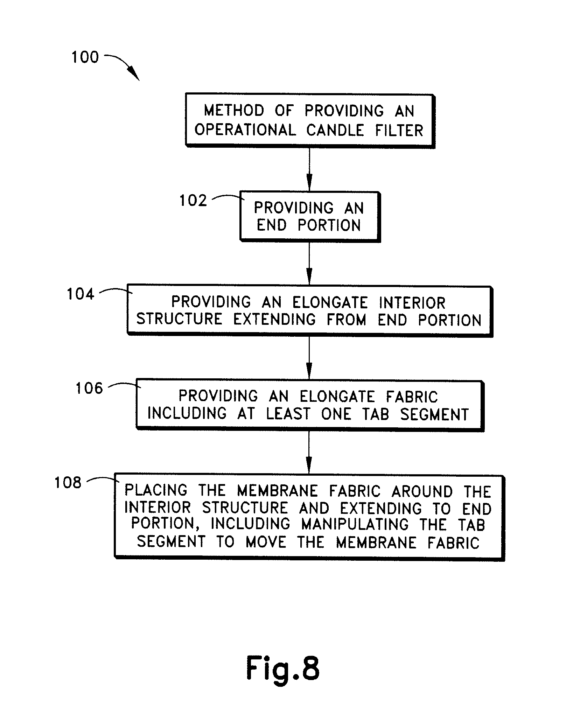

A method 100 of providing an operational candle filter in accordance with one aspect of the present invention is presented herein. Fig. 8 is a flow chart of an example of such a method. At step 102 an end portion of the candle filter is provided. At step 104 an elongate interior structure is provided. The interior structure extends from the end portion and defining a space for a fluid. At step 106 a membrane fabric is provided. The membrane fabric is for filtering a substance from the fluid as the fluid passes through the membrane fabric and into the space defined by the interior structure. The membrane fabric includes at least one extending tab segment for manipulating to move the membrane fabric relative to the elongate interior structure.

At step 108 the membrane fabric is placed to extend around the interior structure and to extend to the end portion. The step of placing the membrane fabric includes manipulating the tab segment of the membrane fabric to move the membrane fabric relative to the elongate interior structure. As can be appreciated that because of the interior structure is elongated and the membrane fabric is itself elongated, the membrane fabric is moved along the elongation direction of the elongate structure to place the membrane fabric around the interior structure.

The invention has been described with reference to various example embodiments. Obviously, modifications and alterations will occur to others upon a reading and understanding of this specification. It is intended to include all such modifications and alterations insofar as they come within the scope of the appended claims or the equivalents thereof.

Various aspects and embodiments of the present invention are defined by the following numbered clauses:
1. A candle filter including:
   an end portion;
   elongate interior structure extending from the end portions and defining a space for a fluid; and
   a membrane fabric for filtering a substance from the fluid as the fluid passes through the membrane fabric and into the space defined by the interior structure, the membrane fabric extending around the interior structure and to the first end portion;
   the membrane fabric including at least one extending tab segment for manipulating to move the membrane fabric relative to the elongate interior structure.
2. A candle filter as set forth in clause 1, further including a tube extending through the end portion for connection to the space defined by the interior structure for fluid flow from the space.
3. A candle filter as set forth in any preceding clause, wherein the membrane fabric is configured to have an opening at the end portion, the end portion sealing the opening of the membrane fabric, and the tab segment being located adjacent to the opening of the membrane fabric.
4. A candle filter as set forth in any preceding clause, wherein the elongate interior structure includes a top block, the end portion including a member, the tab segment is located in a space between the top block and the member of the end portion.
5. A candle filter as set forth in any preceding clause, wherein the end portion includes an annular groove, the tab segment is located in the groove.
6. A candle filter as set forth in any preceding clause, wherein the tab segment is a first tab segment, the membrane fabric including a second tab segment for manipulating to move the membrane fabric relative to the elongate interior structure.
7. A candle filter as set forth in any preceding clause, wherein the membrane fabric is configured to have an opening at the end portion, the end portion sealing the opening of the membrane fabric, and the first and second tab segments being located at the opening of the membrane fabric.
8. A candle filter as set forth in any preceding clause, wherein the end portion is a first end portion, the filter including a second end portion, the membrane fabric also extending to the second end portion, the opening of the membrane fabric is a first opening, the membrane being configured to have a second opening at the second end portion, the second end portion sealing the second opening of the membrane fabric, the tab segment is a first tab segment, the membrane fabric including a second tab segment for manipulating to move the membrane fabric relative to the elongate interior structure, and the second tab segment being located at the second opening of the membrane fabric.
9. A candle filter as set forth in any preceding clause, wherein the end portion and the interior structure are configured to secure to the end portion to the elongate interior structure.
10. A candle filter as set forth in any preceding clause, wherein the elongate interior structure includes a tube and a cage.
11. A method of providing an operational candle filter including:
   providing an end portion;
   providing an elongate interior structure extending from the end portion and defining a space for a fluid;
   providing a membrane fabric for filtering a substance from the fluid as the fluid passes through the membrane fabric and into the space defined by the interior structure, the membrane fabric including at least one extending tab segment for manipulating to move the membrane fabric relative to the elongate interior structure and;
   placing the membrane fabric to extend around the interior structure and to extend to the end portion, including manipulating the tab segment of the membrane fabric to move the membrane fabric relative to the elongate interior structure.
12. A method as set forth in clause 11, wherein the step of placing the membrane fabric includes moving the membrane fabric along the elongate interior structure.
13. A candle filter including:
   an end portion;
   elongate interior structure extending from the end portions and defining a space for a fluid; and
   a membrane fabric for filtering a substance from the fluid as the fluid passes through the membrane fabric and into the space defined by the interior structure, the membrane fabric extending around the interior structure and to the first end portion;
   the membrane fabric including at least one extending means for manipulating to move the membrane fabric relative to the elongate interior structure.
14. A candle filter as set forth in clause 13, wherein the means for manipulating includes at least one tab.
15. A candle filter as set forth in clause 13 or 14, wherein the means for manipulating includes at least two tabs.
16. A candle filter as set forth in any of clauses 13 to 15, wherein the means for manipulating includes an extending portion for grasping.

## Claims

1. A candle filter (10) including:
an end portion (22, 24);
elongate interior structure (20) extending from the end portions and defining a space for a fluid; and
a membrane fabric (40) for filtering a substance from the fluid as the fluid passes through the membrane fabric and into the space defined by the interior structure, the membrane fabric extending around the interior structure and to the first end portion;
the membrane fabric (40) including at least one extending tab segment (42) for manipulating to move the membrane fabric relative to the elongate interior structure.

2. A candle filter (10) as set forth in claim 1, further including a tube (26) extending through the end portion for connection to the space defined by the interior structure for fluid flow from the space.

3. A candle filter (10) as set forth in any preceding claim, wherein the membrane fabric (40) is configured to have an opening at the end portion, the end portion sealing the opening of the membrane fabric, and the tab segment (42) being located adjacent to the opening of the membrane fabric.

4. A candle filter (10) as set forth in any preceding claim, wherein the elongate interior structure includes a top block (60), the end portion including a member, the tab segment (42) is located in a space between the top block and the member of the end portion.

5. A candle filter (10) as set forth in any preceding claim, wherein the end portion (22, 24) includes an annular groove (64), the tab segment (42) is located in the groove.

6. A candle filter (10) as set forth in any preceding claim, wherein the tab segment (42) is a first tab segment, the membrane fabric (40) including a second tab segment for manipulating to move the membrane fabric relative to the elongate interior structure.

7. A candle filter (10) as set forth in any preceding claim, wherein the membrane fabric (40) is configured to have an opening at the end portion, the end portion sealing the opening of the membrane fabric, and the first and second tab segments (42) being located at the opening of the membrane fabric.

8. A candle filter (10) as set forth in any preceding claim, wherein the end portion (22, 24) is a first end portion, the filter including a second end portion, the membrane fabric also extending to the second end portion, the opening of the membrane fabric is a first opening, the membrane being configured to have a second opening at the second end portion, the second end portion sealing the second opening of the membrane fabric (40), the tab segment (42) is a first tab segment, the membrane fabric including a second tab segment for manipulating to move the membrane fabric relative to the elongate interior structure, and the second tab segment being located at the second opening of the membrane fabric.

9. A candle filter (10) as set forth in any preceding claim, wherein the end portion (22, 24) and the interior structure are configured to secure to the end portion to the elongate interior structure.

10. A candle filter (10) as set forth in any preceding claim, wherein the elongate interior structure includes a tube and a cage.

11. A method of providing an operational candle filter (10) including:
providing an end portion (22, 24);
providing an elongate interior structure extending from the end portion and defining a space for a fluid;
providing a membrane fabric (40) for filtering a substance from the fluid as the fluid passes through the membrane fabric and into the space defined by the interior structure, the membrane fabric including at least one extending tab segment (42) for manipulating to move the membrane fabric relative to the elongate interior structure and;
placing the membrane fabric to extend around the interior structure and to extend to the end portion, including manipulating the tab segment of the membrane fabric to move the membrane fabric relative to the elongate interior structure.

12. A method as set forth in claim 11, wherein the step of placing the membrane fabric (40) includes moving the membrane fabric along the elongate interior structure.

13. A candle filter (10) including:
an end portion (22, 24);
elongate interior structure (20) extending from the end portions and defining a space for a fluid; and
a membrane fabric (40) for filtering a substance from the fluid as the fluid passes through the membrane fabric and into the space defined by the interior structure, the membrane fabric extending around the interior structure and to the first end portion;
the membrane fabric (40) including at least one extending means (42) for manipulating to move the membrane fabric relative to the elongate interior structure.

14. A candle filter (10) as set forth in claim 13, wherein the means for manipulating includes at least two tabs (42).

15. A candle filter (10) as set forth in claim 13 or claim 14, wherein the means for manipulating (42) includes an extending portion for grasping.
